# EUROPÄISCHE PATENTSCHRIFT

(11) **EP 2 340 159 B1**
(45) Veröffentlichungstag und Bekanntmachung des Hinweises auf die Patenterteilung: **01.05.2013**
(21) Anmeldenummer: 09737402.9
(22) Anmeldetag: 15.10.2009
(51) Int. Cl.: B29C 70/52, B29C 44/32, B29B 15/12, B29C 53/80, B29K 105/10, B29K 105/04

(54) **VERFAHREN ZUR HERSTELLUNG EINES TANKES EINES WARMWASSERSPEICHERS AUS EINEM FASERVERSTÄRKTEN KUNSTSTOFF**
METHOD FOR THE PRODUCTION OF HOT WATER RESERVOIR MADE OF A FIBER-REINFORCED PLASTIC
PROCÉDÉ DE FABRICATION D'UN RESERVOIR D'EAU CHAUDE EN PLASTIQUE RENFORCÉ PAR FIBRES

(30) Priorität: 22.10.2008 DE 102008043031
(43) Veröffentlichungstag der Anmeldung: 06.07.2011
(73) Patentinhaber: BSH Bosch und Siemens Hausgeräte GmbH, 81739 München (DE)
(72) Erfinder: MAYER, Gebhard, 83278 Traunstein (DE); DORN, Thomas, 83549 Eiselfing (DE)
(86) Internationale Anmeldenummer: PCT/EP2009/063514
(87) Internationale Veröffentlichungsnummer: WO 2010/046305

(56) Entgegenhaltungen:
- WO-A1-01/49473
- WO-A1-2008/034687
- DE-C1- 19 852 159
- US-A- 4 025 257
- Klempner/Frisch: "Polymeric Foams" 1991, Car Hanser Verlag , Munich , XP002583360 ISBN: 3446150978 Seite 400 - Seite 401

## Beschreibung

Die Erfindung betrifft ein Verfahren zur Herstellung mindestens eines faserverstärkten Kunststoftprofiles in Form von einem Tank eines Warmwasserspeichers nach dem Oberbegriff des Anspruchs 1.

Aus der Offenlegungsschrift DE 198 52 159 C1 ist ein gattungsgemäßes Verfahren zur Herstellung von faserverstärkten Kunststoffprofilen durch Pultrusion auf der Basis einer thermoplastischen Matrix mit in die Matrix imprägnierten Fasern bekannt. Hierbei werden im Wickelverfahren verarbeitbare Fasern von einer Spule abgezogen, in einer Ummantelungsdüse mit durch einen Aufschmelzextruder zugeführter thermoplastischer Schmelze imprägniert und auf einem sich drehenden Formkern abgelegt.

Die WO 01/49473 A1 offenbart ebenfalls ein Verfahren zur Herstellung eines faserverstärkten Systems auf der Basis einer thermoplastischen Matrix mit in die Matrix imprägnierten Fasern. Die Matrix kann teilweise aufgeschäumt sein.

Die WO 2008/034687 A1 offenbart ein Verfahren zur Herstellung eines Warmwasserspeichers gemäß dem Oberbegriff des Anspruchs 1.

Aufgabe der Erfindung ist es, ein einfaches und kostengünstiges Verfahren zur Herstellung von einem faserverstärkten Tank eines Warmwasserspeichers bereitzustellen, das eine Isolierung der faserverstärkten Kunststoffprofile bereits im Fertigungsprozess ermöglicht.

Diese Aufgabe wird erfindungsgemäß mit den Merkmalen des Patentanspruchs 1 gelöst.

Bei einem erfindungsgemäßen Verfahren zur Herstellung von einem faserverstärkten Kunststoffprofilen in Form von einem Tank eines Warmwasserspeichers wird die Matrix nach Durchführung des Pultrusionsverfahrens (auch Strangziehverfahren) mindestens teilweise aufgeschäumt. In vorteilhafter Weise kann der Schaum als Isolierung für das faserverstärkte Kunststoffprofil dienen. Ein wesentlicher Vorteil des erfindungsgemäßen Verfahrens liegt darin, dass hierdurch eine Isolierung des faserverstärkten Kunststoffprofils bereits im Fertigungsprozess ermöglicht ist. Hierdurch ist kein zusätzliches Werkzeug und auch kein weiterer Fertigungsschritt notwendig. Somit können bereits bestehende Anlagen zur Durchführung des erfindungsgemäßen Verfahrens verwendet werden, da die Anlagen ohne Umbauten dafür eingesetzt werden können. Ein besonderer Vorteil des erfindungsgemäßen Verfahrens liegt darin, dass kein zusätzlicher und insbesondere kein artfremder Werkstoff zur Isolierung notwendig ist, so dass eine verbesserte Recyclingfähigkeit des Kunststoffprofils erzielt wird. In vorteilhafter weise ist der Schaumstoff praktisch aus jedem Kunststoff herstellbar.

Vorzugsweise erfolgt das mindestens teilweise Aufschäumen der Matrix durch ein chemisches Treibverfahren. Hierdurch ist auf einfache und kostengünstige Weise ein Aufschäumen der Matrix realisierbar, indem der Matrix nach der Pultrusion mindestens ein Treibmittel zugesetzt wird, wobei die die Matrix aufschäumenden Gase bei der Polymerisation frei werden.

Bevorzugt erfolgt das mindestens teilweise Aufschäumen der Matrix durch ein physikalisches Treibverfahren. Auch hierdurch ist auf einfache und kostengünstige Weise ein Aufschäumen der Matrix realisierbar, indem in der Matrix mindestens ein Gas zur Expansion gebracht wird. Hierbei werden der Matrix nach der Pultrusion niedrig siedende Flüssigkeiten zugesetzt, die im Verlauf der Polymerisation verdampfen und so die typischen Gasblasen bilden.

In einer vorteilhaften Ausgestaltung erfolgt das mindestens teilweise Aufschäumen der Matrix durch ein Mischverfahren, indem der Matrix mindestens ein Schäumungsmittel zugesetzt und der entstehende Schaum verfestigt wird.

In einer weiteren vorteilhaften Ausgestaltung erfolgt das mindestens teilweise Aufschäumen der Matrix durch eine Lösungsmethode, indem aus der Matrix nach der Pultrusion Salze unter Bildung von Hohlräumen herausgelöst werden.

Gemäß der Erfindung handelt es sich bei dem faserverstärkten Kunststoffprofil um einen Tank eines Warmwasserspeichers. Der Warmwasserspeichertank kann hierdurch bereits bei seiner Fertigung mit einer Isolierung versehen werden, so dass sich eine deutliche Kostenersparnis bei der Herstellung ergibt.

Anhand des in der Zeichnung dargestellten bevorzugten Ausführungsbeispiels wird die Erfindung nachfolgend näher beschrieben. Es zeigen:
- Fig. 1: eine schematische Darstellung einer Pultrusionsanlage zur Durchführung eines Verfahrens zur Herstellung eines faserverstärkten Kunststoffprofils, welches auf einem Wickelkern abgelegt ist.
- Fig. 2: eine Detailansicht auf das auf dem Wickelkern abgelegte, faserverstärkte Kunststoffprofil.

In den Figuren werden gleiche oder im Wesentlichen gleich bleibende Elemente mit den gleichen Bezugszeichen versehen.

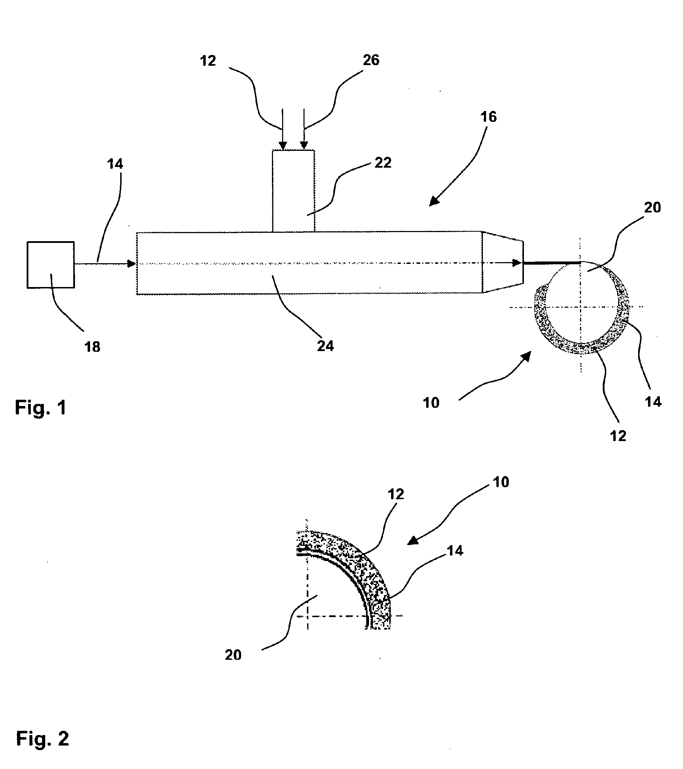

Fig. 1 zeigt in einer schematischen Darstellung eine Pultrusionsanlage 16 zur Durchführung eines Verfahrens zur Herstellung eines faserverstärkten Kunststoffprofils 10 in Form von einem Tank eines Warmwasserspeichers durch Pultrusion auf der Basis einer thermoplastischen Matrix 12 mit in die Matrix 12 imprägnierten Fasern 14.

Die Pultrusionsanlage 16 umfasst eine Zuführeinheit 18 zur Zuführung der Fasern 14, einen Wickelkern 20, einen Aufschmelzextruder 22 zur Zuführung von thermoplastischer Schmelze 12 und eine Ummantelungsdüse 24. Hierbei werden die im Wickelverfahren verarbeitbaren Fasern 14 von der als Spule ausgeführten Zuführeinheit 18 abgezogen, in der Ummantelungsdüse 24 mit der durch den Aufschmelzextruder 22 zugeführten thermoplastischen Schmelze 12 imprägniert und auf dem sich drehenden Wickelkern 20 abgelegt.

Um ein einfaches und kostengünstiges Verfahren zur Herstellung von faserverstärkten Kunststoffprofilen in Form von einem Tank eines Warmwasserspeichers bereitzustellen, das eine Isolierung der faserverstärkten Kunststoffprofile bereits im Fertigungsprozess ermöglicht, wird die Matrix 12 nach Durchführung des Pultrusionsverfahrens mindestens teilweise aufgeschäumt. D.h. nach dem Austritt der thermoplastischen Matrix 12 des faserverstärkten Kunststoffprofils 10 aus der Ummantelungsdüse 24 findet ein mindestens teilweises Aufschäumen der Matrix 12 statt, wobei die Figuren 1 und 2 das Kunststoffprofil 10 nach dem Aufschäumen der Matrix 12 zeigen.

Zum Aufschäumen der Matrix 12 nach dem Pultrusionsverfahren können mehrere Möglichkeiten in Betracht gezogen werden, wobei eine erste Möglichkeit in Fig. 1 dargestellt ist. Die erste Möglichkeit besteht darin, dass das mindestens teilweise Aufschäumen der Matrix 12 durch ein chemisches Treibverfahren erfolgt, indem der Matrix 12 vorzugsweise mindestens ein Treibmittel 26 zugesetzt wird. Im vorliegenden Ausführungsbeispiel wird das Treibmittel 26 vorzugsweise über den Aufschmelzextruder 22 zugesetzt. Durch den Zusatz des Treibmittels 26 erreicht man bei einer chemischen Reaktion eine Gasentwicklung, welche zur Bildung des Schaumstoffes ausreicht.

Eine zweite Möglichkeit besteht darin, dass das mindestens teilweise Aufschäumen der Matrix 12 durch ein physikalisches Treibverfahren erfolgt, indem vorzugsweise mindestens ein Gas in der Matrix 12 zur Expansion gebracht wird. D.h. in der sich verfestigenden Matrix 12 wird das Gas, das sich unter hohem Druck in der Matrix 12 gelöst hat, zur Expansion gebracht. Hierdurch entstehen viele Gasblasen in der Matrix 12 des Kunststoffprofils 10.

Eine dritte Möglichkeit besteht darin, dass das mindestens teilweise Aufschäumen der Matrix 12 durch ein Mischverfahren erfolgt. Vorzugsweise wird der Matrix 12 mindestens ein Schäumungsmittel zugesetzt. Der dadurch entstehende Schaum wird dann verfestigt.

Eine vierte Möglichkeit besteht darin, dass das mindestens teilweise Aufschäumen der Matrix 12 durch eine Lösungsmethode erfolgt, indem aus der Matrix 12 Salze unter Bildung von Hohlräumen herausgelöst werden. D.h. durch Herauslösen verschiedener Salze aus der Matrix des Kunststoffprofils werden ein Schaumprofil bildende Hohlräume erzeugt.

Gemäß der Erfindung handelt es sich bei dem faserverstärkten Kunststoffprofil 10 um einen Tank eines Warmwasserspeichers.

### Bezugszeichenliste

- 10: faserverstärktes Kunststoffprofil
- 12: thermoplastische Matrix
- 14: Fasern
- 16: Pultrusionsanlage
- 18: Zuführeinheit zur Zuführung von Fasern
- 20: Wickelkern
- 22: Aufschmelzextruder
- 24: Ummantelungsdüse
- 26: Treibmittel

## Patentansprüche

1. Verfahren zur Herstellung mindestens eines faserverstärkten Kunststoffprofiles (10) in Form von einem Tank eines Warmwasserspeichers, **dadurch gekennzeichnet, dass** das faserverstärkte Kunstoffprofil durch Pultrusion auf der Basis einer thermoplastischen Matrix (12) mit in die Matrix (12) imprägnierten Fasern (14) hergestellt wird, wobei die Matrix (12) nach Durchführung des Pultrusionsverfahrens mindestens teilweise aufgeschäumt wird, wobei die Fasern (14) in einem Wickelverfahren auf einem sich drehenden Wickelkern (20) abgelegt werden.

2. Verfahren nach Anspruch 1, **dadurch gekennzeichnet, dass** das mindestens teilweise Aufschäumen der Matrix (12) durch ein chemisches Treibverfahren erfolgt.

3. Verfahren nach Anspruch 1 oder 2, **dadurch gekennzeichnet, dass** der Matrix (12) mindestens ein Treibmittel zugesetzt wird.

4. Verfahren nach Anspruch 1, **dadurch gekennzeichnet, dass** das mindestens teilweise Aufschäumen der Matrix (12) durch ein physikalisches Treibverfahren erfolgt.

5. Verfahren nach Anspruch 1 oder 4, **dadurch gekennzeichnet, dass** in der Matrix (12) mindestens ein Gas zur Expansion gebracht wird.

6. Verfahren nach Anspruch 1, **dadurch gekennzeichnet, dass** das mindestens teilweise Aufschäumen der Matrix (12) durch ein Mischverfahren erfolgt.

7. Verfahren nach Anspruch 1 oder 6, **dadurch gekennzeichnet, dass** der Matrix (12) mindestens ein Schäumungsmittel zugesetzt und der entstehende Schaum verfestigt wird.

8. Verfahren nach Anspruch 1, **dadurch gekennzeichnet, dass** das mindestens teilweise Aufschäumen der Matrix (12) durch eine Lösungsmethode erfolgt.

9. Verfahren nach Anspruch 1 oder 8, **dadurch gekennzeichnet, dass** aus der Matrix (12) Salze unter Bildung von Hohlräumen herausgelöst werden.

## Claims

1. Method of producing at least one fibre-reinforced synthetic material profile (10) in the form of a tank of a hot water reservoir, **characterised in that** the fibre-reinforced synthetic material profile is produced by pultrusion on the basis of a thermoplastic matrix (12) with fibres (14) inpregnated in the matrix (12), wherein the matrix (12) is at least partly foamed up after performance of the pultrusion method, wherein the fibres (14) are deposited in a winding process on a rotating winding core (20).

2. Method according to claim 1, **characterised in that** the at least partial foaming-up of the matrix (12) is carried out by a chemical drive process.

3. Method according to claim 1 or 2, **characterised in that** at least one propellant is added to the matrix (12).

4. Method according to claim 1, **characterised in that** the at least partial foaming-up of the matrix (12) is carried out by a physical drive process.

5. Method according to claim 1 or 4, **characterised in that** at least one gas is brought to expansion in the matrix (12).

6. Method according to claim 1, **characterised in that** the at least partial foaming-up of the matrix (12) is caused by a mixing process.

7. Method according to claim 1 or 6, **characterised in that** at least one foaming agent is added to the matrix (12) and the resulting foam is solidified.

8. Method according to claim 1, **characterised in that** the at least partial foaming-up of the matrix (12) is carried out by a dissolving method.

9. Method according to claim 1 or 8, **characterised in that** salts are liberated from the matrix (12) with formation of cavities.

## Revendications

1. Procédé de fabrication d'au moins un profilé en plastique renforcé de fibres (10) sous la forme d'un réservoir d'un accumulateur d'eau chaude, **caractérisé en ce que** le profilé en plastique renforcé de fibres est fabriqué par pultrusion sur la base d'une matrice thermoplastique (12) avec des fibres (14) imprégnées dans la matrice (12), la matrice (12) étant au moins partiellement expansée après la mise en oeuvre du procédé de pultrusion, les fibres (14) étant déposées sur un noyau d'enroulement rotatif (20) selon un procédé d'enroulement.

2. Procédé selon la revendication 1, **caractérisé en ce que** l'expansion au moins partielle de la matrice (12) s'effectue par un procédé d'expansion chimique.

3. Procédé selon la revendication 1 ou 2, **caractérisé en ce que** l'on ajoute au moins un agent d'expansion à la matrice (12).

4. Procédé selon la revendication 1, **caractérisé en ce que** l'expansion au moins partielle de la matrice (12) s'effectue par un procédé d'expansion physique.

5. Procédé selon la revendication 1 ou 4, **caractérisé en ce que** l'on fait s'expanser au moins un gaz dans la matrice (12).

6. Procédé selon la revendication 1, **caractérisé en ce que** l'expansion au moins partielle de la matrice (12) s'effectue par un procédé mixte.

7. Procédé selon la revendication 1 ou 6, **caractérisé en ce que** l'on ajoute au moins un agent moussant à la matrice (12) et l'on fait durcir la mousse obtenue.

8. Procédé selon la revendication 1, **caractérisé en ce que** l'expansion au moins partielle de la matrice (12) s'effectue par une méthode de dissolution.

9. Procédé selon la revendication 1 ou 8, **caractérisé en ce que** l'on extrait par dissolution des sels de la matrice (12) en formant des cavités.
